# EUROPEAN PATENT SPECIFICATION

(11) **EP 4 270 973 B1**
(45) Date of publication and mention of the grant of the patent: **31.12.2025**
(21) Application number: 23182168.7
(22) Date of filing: 12.02.2019
(51) Int. Cl.: G03B 5/04, H04M 1/02, G02B 7/10, G02B 13/00, G02B 15/14, G02B 7/02, H04N 23/55, H04N 23/57, G03B 5/00, G03B 30/00, G03B 17/12

(54) **OPTICAL SYSTEM FOR A CAMERA, AND ELECTRONIC DEVICE COMPRISING SAID OPTICAL SYSTEM**
OPTISCHES SYSTEM FÜR EINE KAMERA, UND MIT DIESEM AUSGESTATTETE ELEKTRONISCHE VORRICHTUNG
SYSTÈME OPTIQUE POUR CAMÉRA, ET DISPOSITIF ÉLECTRONIQUE COMPRENANT LEDIT SYSTÈME OPTIQUE

(43) Date of publication of application: 01.11.2023
(62) Divisional of application: 19705480.2
(73) Proprietor: Huawei Technologies Co., Ltd., Shenzhen, Guangdong 518129 (CN)
(72) Inventor: VIRTA, Markus, 16440 Skalholtsgatan (SE)
(74) Representative: Gill Jennings & Every LLP

(56) References cited:
- EP-A1- 0 837 349
- CN-A- 101 425 762
- US-A- 6 151 171
- US-A1- 2011 043 934

## Description

### TECHNICAL FIELD

The disclosure relates to an optical system for a camera, the optical system comprising an actuator, an actuation module, an optical module, and a frame at least partially surrounding the optical module.

### BACKGROUND

There are several difficulties relating to optical systems for portable electronic devices. Electronic devices such as mobile phones preferably have as small outer dimensions as possible, while optical systems require certain dimensions in order to provide sufficiently good image sharpness, spatial frequency, sensitivity etc.

Therefore, imaging zooms for portable electronic devices have mostly been digital, which however affects the resolution of the images. Digital zoom does not add any information to image, but is done only by cropping and scaling a portion of original image to larger size. Optical zoom, on the other hand, magnifies the target using lenses and provides more details in the original resolution, providing a better resolution image.

Prior art electronic devices with optical zooms conventionally use pocket camera lens barrels, a solution which not only has large dimensions, but which also seals insufficiently towards the interior of the electronic device, and which is insufficiently rigid, in order to have the resistance expected from an everyday life product, like a portable electronic device, against dust, water, and mechanical impact.

Such a pocket camera solution, if downscaled to the size of a portable electronic device such as a mobile phone, would be expensive to produce. Furthermore, the demand for higher performance cameras with high zoom ratios in portable electronic devices requires even larger sensors and optics, resulting in a product which has even larger dimensions, contradicting the trend of portable electronic devices being as thin as possible. Relevant background art is found in US6151171 A, CN101425762 A, US2011/043934 A1 and EP0837349 A1.

### SUMMARY

It is an object to provide an improved optical system. The foregoing and other objects are achieved by the features of the independent claims. Further implementation forms are apparent from the dependent claims, the description, and the figures.

According to a first aspect, there is provided an optical system for a camera, the optical system comprising an actuator, an actuation module, an optical module, and a frame at least partially surrounding the optical module, the actuation module comprising a stationary threaded base element and a moveable dual-threaded connector, the optical module comprising at least one lens and a moveable threaded support element housing the lens, the actuation module and the optical module sharing a center axis, the dual-threaded connector comprising a first connector thread and a second connector thread, the first connector thread and the second connector thread being oriented in opposite directions, the threaded base element comprising a thread engaging the first connector thread, the threaded support element comprising a thread engaging the second connector thread, the actuator being configured to rotate the dual-threaded connector around the center axis in a first tangential direction and in an opposite, second tangential direction,
- the frame interlocking with the threaded support element such that rotation of the threaded support element is prevented, allowing the optical module to be moved between a first end position and a second end position along the center axis in response to rotation of the dual-threaded connector in the tangential directions.

Such a solution utilizes a structure that not only achieves the required focal length for camera optics but does so without visible support while still remaining rigid. The threads transfer external load to the frame without damaging the actuator or possible guides, while also doubling the speed of the zoom action. Furthermore, the setup of threaded parts allows the optical system to be driven by means of a single actuator. Additionally, the height of the optical system is kept to a minimum, e.g. being applicable to electronic devices having a thickness of 7-9 mm.

In a possible implementation form of the first aspect, a height of the optical system along the center axis is larger when the optical module is in the second end position than in the first end position, an overlap between the thread of the threaded base element and the first connector thread, and an overlap between the thread of the threaded support element and the second connector thread, being larger when the optical module is in the first end position than in the second end position, allowing the optical system to fit into a comparatively thin electronic device while still facilitating a focal length which is enough to support high megapixel sensors. Furthermore, the overlap gives sufficient mechanical support to the optical module.

In a further possible implementation form of the first aspect, the frame at least partially surrounds the threaded support element by means of an opening in the frame, a surface of the opening having a shape corresponding to an exterior surface of the threaded support element, the shape being noncircular, providing a simple, efficient, and reliable way of restricting the movement of the threaded support element to the direction of the center axis.

In a further possible implementation form of the first aspect, the first connector thread is a right-handed thread and the second connector thread is a left-handed thread, using well-known combination of threads.

In a further possible implementation form of the first aspect, the threaded base element, the dual-threaded connector, and the threaded support element are at least partially formed as a hollow cylinders, the first connector thread being arranged on an inner surface of the dual-threaded connector cylinder, the second connector thread being arranged on an outer surface of the dual-threaded connector cylinder, and wherein
the thread of the threaded base element is arranged on an outer surface of the threaded base element cylinder, and the thread of the threaded support element is arranged on an inner surface of the threaded support element cylinder, allowing the dual-threaded connector to function as lifting means, as well as supporting means, for the optical module. Furthermore, the outer surface of the optical module is left smooth, facilitating a tight seal against ingress of dust and moisture.

In a further possible implementation form of the first aspect, the optical system further comprises a turning element engaging the actuator and the dual-threaded connector, the actuator being configured to rotate the turning element around the center axis in the first tangential direction and in the second tangential direction, the dual-threaded connector being rotated simultaneously with the turning element, allowing reliable connection between actuator and the remainder of the optical system.

In a further possible implementation form of the first aspect, the dual-threaded connector is stationary in relation to the turning element in the first tangential direction and in the second tangential direction, and the dual-threaded connector is movable in relation to the turning element in the direction of the center axis, allowing a single actuator to operate the optical system between end positions.

In a further possible implementation form of the first aspect, the turning element comprises a tongue extending in parallel with the center axis, and the dual-threaded connector comprises a corresponding groove extending in parallel with the center axis, the dual-threaded connector being rotated around the center axis in the first tangential direction and in the second tangential direction by means of the tongue applying a tangentially directed force onto a surface of the groove, the tongue and groove combination allowing contact with the actuator to be maintained while still transferring the rotational movement to the threaded components.

In a further possible implementation form of the first aspect, the actuator is an electromagnetic actuator, a rotor of the actuator engaging the dual-threaded connector or the turning element such that the dual-threaded connector is rotated around the center axis in the first tangential direction and in the second tangential direction, providing small yet sufficient means for driving the optical system.

In a further possible implementation form of the first aspect, the actuator comprises a lead screw or gear, and the dual-threaded connector or the turning element comprises teeth engaging the lead screw or the gear, providing simple, reliable, and spatially efficient means for driving the optical system.

In a further possible implementation form of the first aspect, the threaded base element houses at least one of a further lens and a sensor, providing a housing for the stationary components of the optical system.

According to a second aspect, there is provided an electronic device comprising an optical system according to the above, a gasket, a device chassis, and a device housing at least partially enclosing the optical system and the device chassis, the device housing comprising a throughgoing opening accommodating the gasket and the optical module of the optical system.

The electronic device comprises a structure that not only achieves the required focal length for the camera optics but does so without visible support while still remaining rigid. The visibility of the optical system is kept to a minimum, though allowing a comparatively long part of the optical system to protrude, and the gap between the optical module and the device housing can be efficiently sealed since there are no threads on the outside of optical system.

In a possible implementation form of the second aspect, the device housing comprises the frame of the optical system, reducing the need for additional components and providing very a stable frame and guide for the optical system.

In a further possible implementation form of the second aspect. the device chassis comprises the threaded base element of the optical system, reducing the need for additional components and providing very a stable base element for the optical system.

This and other aspects will be apparent from and the embodiments described below.

### BRIEF DESCRIPTION OF THE DRAWINGS

In the following detailed portion of the present disclosure, the aspects, embodiments and implementations will be explained in more detail with reference to the example embodiments shown in the drawings, in which:
Fig. 1a shows a schematic perspective view of an electronic device in accordance with one embodiment of the present invention, wherein the optical system is in a first end position;
Fig. 1b is a further schematic illustration of the embodiment of Fig. 1a, wherein the optical system is in a second end position;
Fig. 2a shows an exploded view of an optical system in accordance with one embodiment of the present invention;
Fig. 2b shows a cross-sectional view of the embodiment of Fig. 2a, wherein the optical system is in a first end position;
Fig. 2c shows a cross-sectional view of the embodiment of Figs. 2a and 2b, wherein the optical system is in a second end position;
Fig. 3a shows an exploded view of an optical system in accordance with a further embodiment of the present invention;
Fig. 3b shows a cross-sectional view of the embodiment of Fig. 3a, wherein the optical system is in a first end position;
Fig. 3c shows a cross-sectional view of the embodiment of Figs. 3a and 3b, wherein the optical system is in a second end position.

### DETAILED DESCRIPTION

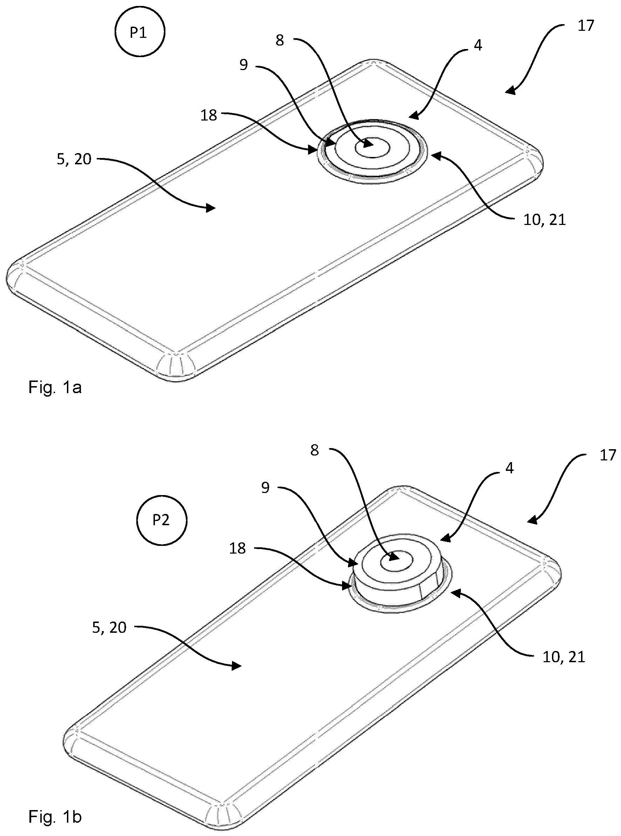

Figs. 1a and 1b show an electronic device 17 comprising an optical system 1, a gasket 18, a device chassis 19, and a device housing 20 at least partially enclosing the optical system 1 and the device chassis 19. The device housing 20 comprises a throughgoing opening 21 which accommodates the gasket 18 and the optical module 4 of the optical system 1.

In a first end position P1, shown in Fig. 1a, the optical system 1 is in a retracted position in which the optical system is retracted past, or aligned with, the outer surface of the device housing 20 such that no part of the optical system 1 protrudes past the outer surface of the device housing 20. In the retracted position, the camera function is preferably inactive, but it is a further possibility that the camera function can be activated independently of the position of the optical system 1. In a second end position P2, shown in Fig. 1b, the optical system 1 is in an extended position in which the optical system extends past the outer surface of the device housing 20. In the extended position, the camera function is preferably active, but it is a further possibility that the camera function can be inactivated independently of the position of the optical system 1.

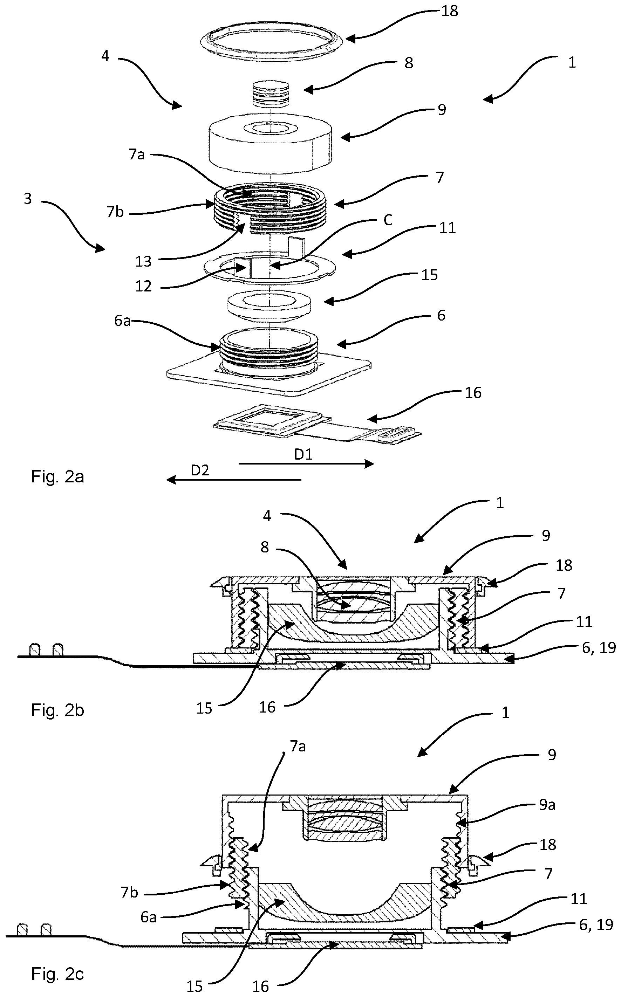

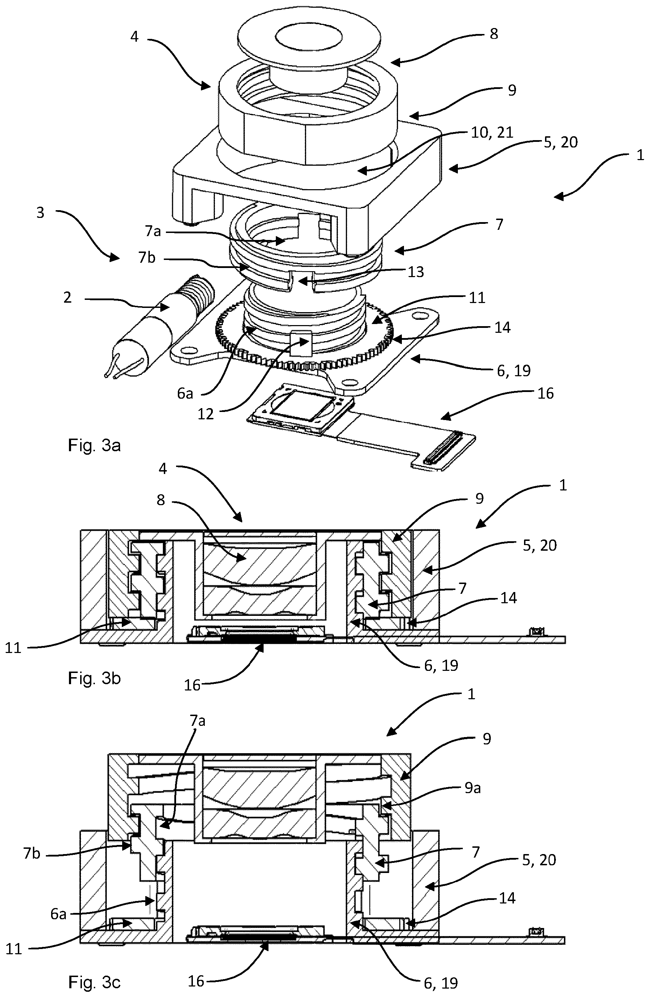

Figs 2a-2c and 3a-3c show different embodiments of the above-mentioned optical system 1. The optical system 1 comprises an actuation module 3, an optical module 4, and a frame 5 at least partially surrounding the optical module 4. The actuation module 3 and the optical module 4 are arranged such that they share a center axis C.

The actuation module 3 comprises a stationary threaded base element 6 and a moveable dual-threaded connector 7. The optical module 4 comprises at least one lens 8 and a moveable threaded support element 9 housing the lens 8. The stationary threaded base element 6 and the moveable threaded support element 9 are interconnected by means of the a moveable dual-threaded connector 7.

The dual-threaded connector 7 comprises a first connector thread 7a and a second connector thread 7b, the first connector thread 7a and the second connector thread 7b being oriented in opposite directions. In one embodiment, the first connector thread 7a is a right-handed thread and the second connector thread 7b is a left-handed thread, it is however possible that the directions of the first connector thread 7a and the second connector thread 7b are inversed, such that the first connector thread 7a is a left-handed thread and the second connector thread 7b is a right-handed thread.

The threaded base element 6 preferably comprises a plate-shaped section and a protruding section extending perpendicular to the surface of the plate-shaped section, from the plate-shaped section. The protruding section comprises a thread 6a configured to engage the first connector thread 7a, i.e. if the first connector thread 7a is a right-handed thread, the thread 6a is also right-handed. In one embodiment, the threaded base element 6 furthermore houses at least one of a further lens 15 and a sensor 16, components which ideally are stationary.

The threaded support element 9 comprises a thread 9a configured to engage the second connector thread 7b, i.e. if the second connector thread 7b is a left-handed thread, the thread 9a is also left-handed.

In one embodiment, the threaded base element 6, the dual-threaded connector 7, and the threaded support element 9 are at least partially formed as hollow cylinders, the threaded base element 6 fitting partially within the dual-threaded connector 7, and the dual-threaded connector 7 fitting at least partially, possibly completely, within the threaded support element 9. The first connector thread 7a is arranged on the inner surface of the dual-threaded connector cylinder 7, and the second connector thread 7b is arranged on the outer surface of the dual-threaded connector cylinder 7. The thread 6a of the threaded base element 6 is arranged on the outer surface of the threaded base element cylinder 6, and the thread 9a of the threaded support element 9 is arranged on the inner surface of the threaded support element cylinder 9. Hence, there is an overlap between the threaded base element 6 and the dual-threaded connector 7, as well as an overlap between the threaded support element 9 and the dual-threaded connector 7. The overlap comprises an overlap between the thread 6a of the threaded base element 6 and the first connector thread 7a, and an overlap between the thread 9a of the threaded support element 9 and the second connector thread 7b.

The optical system 1 further comprises an actuator 2, shown in Fig. 3a, which may be an electromagnetic actuator, and/or comprise a lead screw or gear. The actuator 2 is configured to rotate the dual-threaded connector 7 around the center axis C in a first tangential direction D1 and in an opposite, second tangential direction D2. Rotation in the first tangential direction D1 results in the optical system being moved from the first end position P1, i.e. the retracted position, to the second end position P2, i.e. the extended position. Rotation in the second tangential direction D2 results in the optical system being moved from the second end position P2, i.e. the extended position, to the first end position P1, i.e. the retracted position. Depending on the direction of the threads, rotation in the first tangential direction D1 and in the second tangential direction D2 could lead to inversed end positions P1, P2.

The frame 5, shown in Figs. 3a-3c and which at least partially surrounds the optical module 4, interlocks with the threaded support element 9 such that rotation of the threaded support element 9 is prevented. This allows the optical module 4 to be moved between the first end position P1 and the second end position P2 along the center axis C in response to rotation of the dual-threaded connector 7 in the tangential directions D1, D2. In one embodiment, the frame 5 at least partially surrounds the threaded support element 9 and the interlock between the frame 5 and the optical module 4 is achieved by means of an opening 10 in the frame 5. The surface of the opening 10 has a shape which corresponds to the exterior, peripheral surface of the threaded support element 9, the shape being noncircular. As shown in Fig. 3a, the surface of the opening 10 and the peripheral surface of the threaded support element 9 may both be essentially circular, but each being provided with two oppositely arranged flat surfaces. The surface of the opening 10 and the peripheral surface of the threaded support element 9 may also both be essentially elliptical or polygonal.

As mentioned above, the first end position P1 is a retracted position and the second end position P2 is an extended position. Hence, the height of the optical system 1 along the center axis C is larger when the optical module 4 is in the second end position P2 than in the first end position P1. The overlap between the thread 6a of the threaded base element 6 and the first connector thread 7a, and the overlap between the thread 9a of the threaded support element 9 and the second connector thread 7b, is larger when the optical module 4 is in the first end position P1 than in the second end position P2. The overlaps are as small as possible when the optical module 4 is in the second end position P2, such that optical system 1 is as long as possible which provides the suitable focal length to support high megapixel sensors. In a preferred embodiment, the dual-threaded connector 7 is moved halfway up along its length, which gives support to the optical module 4.

In one embodiment, the optical system 1 further comprises a turning element 11 engaging the actuator 2 and the dual-threaded connector 7. The actuator 2 is configured to rotate the turning element 11 around the center axis C in the first tangential direction D1 and in the second tangential direction D2, the dual-threaded connector 7 being rotated simultaneously with the turning element 11. Preferably, the dual-threaded connector 7 is stationary in relation to the turning element 11 in the first tangential direction D1 and in the second tangential direction D2, while being movable in relation to the turning element 11 in the direction of the center axis.

The turning element 11 may be fixedly connected to the dual-threaded connector 7, e.g. in the form of a flange extending from one end of the dual-threaded connector 7, in a direction perpendicular to the center axis C of the optical system 1. In this case the dual-threaded connector 7 is stationary in relation to the turning element 11 in the first tangential direction D1, in the second tangential direction D2, and in the direction of the center axis, while being moveable in relation to the threaded base element 6.

Preferably, however, the turning element 11 is a separate component partially enclosing the threaded base element 6. The turning element 11 comprises a disc-shaped section having an opening enclosing one end of the protruding, threaded cylinder section of the threaded base element 6, the disc-shaped section extending parallel with the plate-shaped section of the threaded base element 6 and essentially being in abutment with the plate-shaped section.

The turning element 11 comprises at least one, preferably two oppositely arranged, tongues 12 extending in parallel with the center axis C. The dual-threaded connector 7 comprises at least one corresponding groove 13, extending in parallel with the center axis C, adapted for accommodating the tongue 12. The dual-threaded connector 7 is rotated around the center axis C in the first tangential direction D1 and in the second tangential direction D2 by means of the tongue 12 applying a tangentially directed force onto the surface of the groove 13. Simultaneously, the surface of the grove 13 slides along the corresponding surface of the tongue 12 in the direction of the center axis C, allowing the dual-threaded connector 7 to move towards, and from, the threaded base element 6 and the turning element 11 in the direction of the center axis C.

As mentioned above, the actuator 2 may be an electromagnetic actuator, the rotor of which engages the dual-threaded connector 7 or the turning element 11 such that the dual-threaded connector 7 is rotated around the center axis C in the first tangential direction D1 and in the second tangential direction D2, in response to the action of the actuator. The dual-threaded connector 7 or the turning element 11 may comprise grooves, as shown in Fig.2a, preferably arranged along the periphery of the disc-shaped section of the turning element 11 and adapted for engaging the electromagnetic actuator.

In one embodiment, the actuator 2 comprises a lead screw or gear, while the dual-threaded connector 7 or the turning element 11 comprises corresponding teeth 14 engaging the lead screw or the gear, as shown in Fig. 3a. The teeth 14 are preferably arranged along the periphery of the disc-shaped section of the turning element 11. When activated, e.g. by a DC-motor, the turning element 11 turns the dual-threaded connector 7 which is raised by thread 6a. The turning element 11 stays at the bottom to maintain its contact with the DC-motor.

As mentioned above, the present disclosure further relates to an electronic device 17 comprising a gasket 18, a device chassis 19, and a device housing 20 at least partially enclosing the optical system 1 and the device chassis 19. The device housing 20 comprises a throughgoing opening 21 accommodating the gasket 18 and the optical module 4 of the optical system 1, allowing the threaded support element 9 of the optical module 4 to move through the opening 21 as it moves between the first end position P1 and the second end position P2 along the center axis C. The optical module 4, the gasket 18, and the opening 21 share center axis C. The optical module 4 can be efficiently sealed against the device housing 20 by means of the gasket 18, since there are no visible threads on the outside of the threaded support element 9, its outer surface being smooth. The gasket 18, e.g. an elastomer sealing ring, is mounted to, or integrated with, the device housing 20.

In one embodiment, shown in Figs. 2a-2c, the device housing 20 comprises the frame 5 of the optical system 1, such that the frame 5 is part of one of the external components of the electronic device, e.g. the back cover.

In one embodiment, the device chassis 19 comprises the threaded base element 6 of the optical system 1. The threaded base element 6 may be integral with the device chassis 19 or a separate component fixed to the device chassis 19 by means of e.g. adhesive or screws.

The reference signs used in the claims shall not be construed as limiting the scope.

## Claims

1. An optical system (1) for a camera, said optical system comprising an actuator (2), an actuation module (3), an optical module (4), and a frame (5) at least partially surrounding said optical module (4),
- said actuation module (3) comprising a stationary threaded base element (6) and a moveable dual-threaded connector (7),
- said optical module (4) comprising at least one lens (8) and a moveable threaded support element (9) housing said lens (8),
- said actuation module (3) and said optical module (4) sharing a center axis (C),
- said dual-threaded connector (7) comprising a first connector thread (7a) and a second connector thread (7b), said first connector thread (7a) and said second connector thread (7b) being oriented in opposite directions,
said threaded base element (6) comprising a thread (6a) engaging said first connector thread (7a),
said threaded support element (9) comprising a thread (9a) engaging said second connector thread (7b),
- said actuator (2) being configured to rotate said dual-threaded connector (7) around said center axis (C) in a first tangential direction (D1) and in an opposite, second tangential direction (D2),
- said frame (5) interlocking with said threaded support element (9) such that rotation of said threaded support element (9) is prevented,
allowing said optical module (4) to be moved between a first end position (P1) and a second end position (P2) along said center axis (C) in response to rotation of said dual-threaded connector (7) in said tangential directions (D1, D2), wherein said first connector thread (7a) is a right-handed thread and said second connector thread (7b) is a left-handed thread,
wherein
said threaded base element (6) , said dual-threaded connector (7), and said threaded support element (9) are at least partially formed as a hollow cylinders, **characterized in that**
said first connector thread (7a) being arranged on an inner surface of said dual-threaded connector cylinder, said second connector thread (7b) being arranged on an outer surface of said dual-threaded connector cylinder, and wherein the thread (6a) of said threaded base element (6) is arranged on an outer surface of said threaded base element cylinder, and
said thread (9a) of said threaded support element (9) is arranged on an inner surface of said threaded support element cylinder;
wherein an outer surface of the optical module is smooth, such that it forms a tight seal against ingress of dust and moisture.

2. The optical system (1) according to claim 1, wherein a height of said optical system (1) along said center axis (C) is larger when said optical module (4) is in said second end (P2) position than in said first end position (P1), an overlap between the thread (6a) of said threaded base element (6) and said first connector thread (7a), and an overlap between the thread (9a) of said threaded support element (9) and said second connector thread (7b), being larger when said optical module (4) is in said first end position (P1) than in said second end position (P2).

3. The optical system (1) according to claim 1 or 2, wherein said frame (5) at least partially surrounds said threaded support element (9) by means of an opening (10) in said frame (5), a surface of said opening (10) having a shape corresponding to an exterior surface of said threaded support element (9), said shape being noncircular.

4. The optical system (1) according to any one of the previous claims, further comprising a turning element (11) engaging said actuator (2) and said dual-threaded connector (7), said actuator (2) being configured to rotate said turning element (11) around said center axis (C) in said first tangential direction (D1) and in said second tangential direction (D2), said dual-threaded connector (7) being rotated simultaneously with said turning element (11).

5. The optical system (1) according to claim 4, wherein said dual-threaded connector (7) is stationary in relation to said turning element (11) in said first tangential direction (D1) and in said second tangential direction (D2), and said dual-threaded connector (7) is movable in relation to said turning element (11) in the direction of said center axis.

6. The optical system (1) according to claim 4 or 5, wherein said turning element (11) comprises a tongue (12) extending in parallel with said center axis (C), and
said dual-threaded connector (7) comprises a corresponding groove (13) extending in parallel with said center axis (C), said dual-threaded connector (7) being rotated around said center axis (C) in said first tangential direction (D1) and in said second tangential direction (D2) by means of said tongue (12) applying a tangentially directed force onto a surface of said groove (13).

7. The optical system (1) according to any one of the previous claims, wherein said actuator (2) is an electromagnetic actuator, a rotor of said actuator engaging said dual-threaded connector (7) or said turning element (11) such that said dual-threaded connector (7) is rotated around said center axis (C) in said first tangential direction (D1) and in said second tangential direction (D2).

8. The optical system (1) according to any one of claims 1 to 6, wherein said actuator (2) comprises a lead screw or gear, and said dual-threaded connector (7) or said turning element (11) comprises teeth (14) engaging said lead screw or said gear.

9. The optical system (1) according to any one of the previous claims, wherein said threaded base element (6) houses at least one of a further lens (15) and a sensor (16).

10. An electronic device (17) comprising an optical system (1) according to any one of claims 1 to 9, a gasket (18), a device chassis (19), and a device housing (20) at least partially enclosing said optical system (1) and said device chassis,
said device housing comprising a throughgoing opening (21) accommodating said gasket (18) and the optical module (4) of said optical system (1).

11. The electronic device (17) according to claim 10, wherein said device housing (20) comprises the frame (5) of said optical system (1).

12. The electronic device (17) according to claim 10 or 11, wherein said device chassis (19) comprises the threaded base element (6) of said optical system (1).

## Patentansprüche

1. Optisches System (1) für eine Kamera, wobei das optische System ein Betätigungsglied (2), ein Betätigungsmodul (3), ein optisches Modul (4) und einen Rahmen (5), der das optische Modul (4) zumindest teilweise umgibt, umfasst,
- wobei das Betätigungsmodul (3) ein stationäres Basiselement (6) mit Gewinde und einen beweglichen Verbinder (7) mit doppeltem Gewinde umfasst,
- wobei das optische Modul (4) mindestens eine Linse (8) und ein bewegliches Stützelement (9) mit Gewinde, das die Linse (8) aufnimmt, umfasst,
- wobei das Betätigungsmodul (3) und das optische Modul (4) eine Mittelachse (C) teilen,
- wobei der Verbinder (7) mit doppeltem Gewinde ein erstes Verbindergewinde (7a) und ein zweites Verbindergewinde (7b) umfasst, wobei das erste Verbindergewinde (7a) und das zweite Verbindergewinde (7b) in entgegengesetzten Richtungen ausgerichtet sind,
wobei das Basiselement (6) mit Gewinde ein Gewinde (6a) umfasst, das das erste Verbindergewinde (7a) in Eingriff bringt,
wobei das Stützelement (9) mit Gewinde ein Gewinde (9a) umfasst, das das zweite Verbindergewinde (7b) in Eingriff bringt,
- wobei das Betätigungsglied (2) dazu konfiguriert ist, den Verbinder (7) mit doppeltem Gewinde um die Mittelachse (C) in einer ersten tangentialen Richtung (D1) und in einer entgegengesetzten, zweiten tangentialen Richtung (D2) zu drehen,
- wobei der Rahmen (5) mit dem Stützelement (9) mit Gewinde derart ineinandergreift, dass eine Drehung des Stützelements (9) mit Gewinde verhindert wird,
was ermöglicht, dass das optische Modul (4) zwischen einer ersten Endposition (P1) und einer zweiten Endposition (P2) entlang der Mittelachse (C) in Reaktion auf eine Drehung des Verbinders (7) mit doppeltem Gewinde in den tangentialen Richtungen (D1, D2) bewegt wird,
wobei das erste Verbindergewinde (7a) ein Rechtsgewinde ist und das zweite Verbindergewinde (7b) ein Linksgewinde ist,
wobei
das Basiselement (6) mit Gewinde, der Verbinder (7) mit doppeltem Gewinde und das Stützelement (9) mit Gewinde zumindest teilweise als hohle Zylinder ausgebildet sind, **dadurch gekennzeichnet, dass**
das erste Verbindergewinde (7a) auf einer Innenfläche des Verbinderzylinders mit doppeltem Gewinde angeordnet ist, das zweite Verbindergewinde (7b) auf einer Außenfläche des Verbinderzylinders mit doppeltem Gewinde angeordnet ist, und wobei das Gewinde (6a) des Basiselements (6) mit Gewinde auf einer Außenfläche des Basiselementzylinders mit Gewinde angeordnet ist, und
das Gewinde (9a) des Stützelements (9) mit Gewinde auf einer Innenfläche des Stützelementzylinders mit Gewinde angeordnet ist;
wobei eine Außenfläche des optischen Moduls glatt ist, so dass sie eine dichte Abdichtung gegen einen Eintritt von Schmutz und Feuchtigkeit bildet.

2. Optisches System (1) nach Anspruch 1, wobei eine Höhe des optischen Systems (1) entlang der Mittelachse (C) größer ist, wenn sich das optische Modul (4) in der zweiten Endposition (P2) befindet, als in der ersten Endposition (P1), wobei eine Überlagerung zwischen dem Gewinde (6a) des Basiselements (6) mit Gewinde und dem ersten Verbindergewinde (7a) und eine Überlagerung zwischen dem Gewinde (9a) des Stützelements (9) mit Gewinde und dem zweiten Verbindergewinde (7b) größer ist, wenn sich das optische Modul (4) in der ersten Endposition (P1) befindet, als in der zweiten Endposition (P2).

3. Optisches System (1) nach Anspruch 1 oder 2, wobei der Rahmen (5) zumindest teilweise das Stützelement (9) mit Gewinde mittels einer Öffnung (10) in dem Rahmen (5) umgibt, wobei eine Fläche der Öffnung (10) eine Form aufweist, die einer Außenfläche des Stützelements (9) mit Gewinde entspricht, wobei die Form nicht kreisförmig ist.

4. Optisches System (1) nach einem der vorhergehenden Ansprüche, ferner umfassend ein Drehelement (11), das das Betätigungsglied (2) und den Verbinder (7) mit doppeltem Gewinde in Eingriff bringt, wobei das Betätigungsglied (2) dazu konfiguriert ist, das Drehelement (11) um die Mittelachse (C) in der ersten tangentialen Richtung (D1) und in der zweiten tangentialen Richtung (D2) zu drehen, wobei der Verbinder (7) mit doppeltem Gewinde gleichzeitig mit dem Drehelement (11) gedreht wird.

5. Optisches System (1) nach Anspruch 4, wobei der Verbinder (7) mit doppeltem Gewinde in Relation zu dem Drehelement (11) in der ersten tangentialen Richtung (D1) und in der zweiten tangentialen Richtung (D2) stationär ist, und wobei der Verbinder (7) mit doppeltem Gewinde in Relation zu dem Drehelement (11) in der Richtung der Mittelachse beweglich ist.

6. Optisches System (1) nach Anspruch 4 oder 5, wobei das Drehelement (11) eine Zunge (12) umfasst, die sich parallel zu der Mittelachse (C) erstreckt, und
wobei der Verbinder (7) mit doppeltem Gewinde eine entsprechende Nut (13) umfasst, die sich parallel zu der Mittelachse (C) erstreckt, wobei der Verbinder (7) mit doppeltem Gewinde um die Mittelachse (C) in der ersten tangentialen Richtung (D1) und in der zweiten tangentialen Richtung (D2) mittels der Zunge (12) gedreht wird, die eine tangential gerichtete Kraft auf eine Fläche der Nut (13) aufbringt.

7. Optisches System (1) nach einem der vorhergehenden Ansprüche, wobei das Betätigungsglied (2) ein elektromagnetisches Betätigungsglied ist, wobei ein Rotor des Betätigungsglieds den Verbinder (7) mit doppeltem Gewinde oder das Drehelement (11) derart in Eingriff bringt, dass der Verbinder (7) mit doppeltem Gewinde um die Mittelachse (C) in der ersten tangentialen Richtung (D1) und in der zweiten tangentialen Richtung (D2) gedreht wird.

8. Optisches System (1) nach einem der Ansprüche 1 bis 6, wobei das Betätigungsglied (2) eine Leitspindel oder ein Zahnrad umfasst, und wobei der Verbinder (7) mit doppeltem Gewinde oder das Drehelement (11) Zähne (14) umfasst, die die Leitspindel oder das Zahnrad in Eingriff bringen.

9. Optisches System (1) nach einem der vorhergehenden Ansprüche, wobei das Basiselement (6) mit Gewinde mindestens eines einer weiteren Linse (15) und eines Sensors (16) aufnimmt.

10. Elektronisches Gerät (17), umfassend ein optisches System (1) nach einem der Ansprüche 1 bis 9, eine Dichtung (18), ein Gerätechassis (19) und ein Gerätegehäuse (20), das das optische System (1) und das Gerätechassis zumindest teilweise umschließt,
wobei das Gerätegehäuse eine durchgehende Öffnung (21) umfasst, die die Dichtung (18) und das optische Modul (4) des optischen Systems (1) aufnimmt.

11. Elektronisches Gerät (17) nach Anspruch 10, wobei das Gerätegehäuse (20) den Rahmen (5) des optischen Systems (1) umfasst.

12. Elektronisches Gerät (17) nach Anspruch 10 oder 11, wobei das Gerätechassis (19) das Basiselement (6) mit Gewinde des optischen Systems (1) umfasst.

## Revendications

1. Système optique (1) pour caméra, ledit système optique comportant un actionneur (2), un module (3) d'actionnement, un module optique (4), et un cadre (5) entourant au moins partiellement ledit module optique (4),
- ledit module (3) d'actionnement comportant un élément fileté fixe (6) de base et un raccord mobile (7) à double filetage,
- ledit module optique (4) comportant au moins une lentille (8) et un élément porteur fileté mobile (9) renfermant ladite lentille (8),
- ledit module (3) d'actionnement et ledit module optique (4) ayant en commun un axe central (C),
- ledit raccord (7) à double filetage comportant un premier filetage (7a) de raccord et un second filetage (7b) de raccord, ledit premier filetage (7a) de raccord et ledit second filetage (7b) de raccord étant orientés dans des sens opposés,
ledit élément fileté (6) de base comportant un filetage (6a) interagissant avec ledit premier filetage (7a) de raccord,
ledit élément porteur fileté (9) comportant un filetage (9a) interagissant avec ledit second filetage (7b) de raccord,
- ledit actionneur (2) étant configuré pour faire tourner ledit raccord (7) à double filetage autour dudit axe central (C) dans un premier sens tangentiel (D1) et dans un second sens tangentiel (D2) opposé,
- ledit cadre (5) s'imbriquant avec ledit élément porteur fileté (9) de telle façon qu'une rotation dudit élément porteur fileté (9) soit empêchée,
permettant audit module optique (4) d'être déplacé entre une première position d'extrémité (P1) et une seconde position d'extrémité (P2) le long dudit axe central (C) en réponse à une rotation dudit raccord (7) à double filetage dans lesdits sens tangentiels (D1, D2), ledit premier filetage (7a) de raccord étant un filetage à droite et ledit second filetage (7b) de raccord étant un filetage à gauche,
ledit élément fileté (6) de base, ledit raccord (7) à double filetage et ledit élément porteur fileté (9) étant au moins partiellement formés comme des cylindres creux, **caractérisé en ce que**
ledit premier filetage (7a) de raccord est disposé sur une surface intérieure dudit cylindre de raccord à double filetage, ledit second filetage (7b) de raccord est disposé sur une surface extérieure dudit cylindre de raccord à double filetage, et le filetage (6a) dudit élément fileté (6) de base étant disposé sur une surface extérieure dudit cylindre d'élément fileté de base, et
ledit filetage (9a) dudit élément porteur fileté (9) étant disposé sur une surface intérieure dudit cylindre d'élément porteur fileté ;
une surface extérieure du module optique étant lisse, de telle façon qu'elle forme un joint étanche contre la pénétration de poussière et d'humidité.

2. Système optique (1) selon la revendication 1, une hauteur dudit système optique (1) le long dudit axe central (C) étant plus grande lorsque ledit module optique (4) se trouve dans ladite seconde position d'extrémité (P2) que dans ladite première position d'extrémité (P1), un recouvrement entre le filetage (6a) dudit élément fileté (6) de base et ledit premier filetage (7a) de raccord, et un recouvrement entre le filetage (9a) dudit élément porteur fileté (9) et ledit second filetage (7b) de raccord, étant plus grands lorsque ledit module optique (4) se trouve dans ladite première position d'extrémité (P1) que dans ladite seconde position d'extrémité (P2).

3. Système optique (1) selon la revendication 1 ou 2, ledit cadre (5) entourant au moins partiellement ledit élément porteur fileté (9) au moyen d'une ouverture (10) dans ledit cadre (5), une surface de ladite ouverture (10) présentant une forme correspondant à une surface extérieure dudit élément porteur fileté (9), ladite forme étant non circulaire.

4. Système optique (1) selon l'une quelconque des revendications précédentes, comportant en outre un élément (11) de pivotement interagissant avec ledit actionneur (2) et ledit raccord (7) à double filetage, ledit actionneur (2) étant configuré pour faire tourner ledit élément (11) de pivotement autour dudit axe central (C) dans ledit premier sens tangentiel (D1) et dans ledit second sens tangentiel (D2), ledit raccord (7) à double filetage étant mis en rotation simultanément avec ledit élément (11) de pivotement.

5. Système optique (1) selon la revendication 4, ledit raccord (7) à double filetage étant fixe par rapport audit élément (11) de pivotement dans ledit premier sens tangentiel (D1) et dans ledit second sens tangentiel (D2), et ledit raccord (7) à double filetage étant mobile par rapport audit élément (11) de pivotement dans la direction dudit axe central.

6. Système optique (1) selon la revendication 4 ou 5, ledit élément (11) de pivotement comportant un tenon (12) s'étendant parallèlement audit axe central (C), et
ledit raccord (7) à double filetage comportant une rainure (13) correspondante s'étendant parallèlement audit axe central (C), ledit raccord (7) à double filetage étant mis en rotation autour dudit axe central (C) dans ledit premier sens tangentiel (D1) et dans ledit second sens tangentiel (D2) au moyen de l'application par ledit tenon (12) d'une force dirigée tangentiellement sur une surface de ladite rainure (13).

7. Système optique (1) selon l'une quelconque des revendications précédentes, ledit actionneur (2) étant un actionneur électromagnétique, un rotor dudit actionneur interagissant avec ledit raccord (7) à double filetage ou ledit élément (11) de pivotement de telle façon que ledit raccord (7) à double filetage soit mis en rotation autour dudit axe central (C) dans ledit premier sens tangentiel (D1) et dans ledit second sens tangentiel (D2).

8. Système optique (1) selon l'une quelconque des revendications 1 à 6, ledit actionneur (2) comportant une vis sans fin ou une roue dentée, et ledit raccord (7) à double filetage ou ledit élément (11) de pivotement comportant des dents (14) interagissant avec ladite vis sans fin ou ladite roue dentée.

9. Système optique (1) selon l'une quelconque des revendications précédentes, ledit élément fileté (6) de base renfermant une lentille supplémentaire (15) et/ou un capteur (16).

10. Dispositif électronique (17) comportant un système optique (1) selon l'une quelconque des revendications 1 à 9, un joint (18), un châssis (19) de dispositif, et un boîtier (20) de dispositif enveloppant au moins partiellement ledit système optique (1) et ledit châssis de dispositif,
ledit boîtier de dispositif comportant une ouverture débouchante (21) recevant ledit joint (18) et le module optique (4) dudit système optique (1).

11. Dispositif électronique (17) selon la revendication 10, ledit boîtier (20) de dispositif comportant le cadre (5) dudit système optique (1).

12. Dispositif électronique (17) selon la revendication 10 ou 11, ledit châssis (19) de dispositif comportant l'élément fileté (6) de base dudit système optique (1).
